# EUROPEAN PATENT APPLICATION

(11) **EP 2 667 308 A1**
(43) Date of publication of application: **27.11.2013**
(21) Application number: 11856034.1
(22) Date of filing: 19.01.2011
(51) Int. Cl.: G06F 12/04

(54) **DATA WRITING CONTROL DEVICE, DATA WRITING CONTROL METHOD, AND INFORMATION PROCESSING DEVICE**

(71) Applicant: FUJITSU LIMITED, Kawasaki-shi Kanagawa 211-8588 (JP)
(72) Inventor: SATO, Kenta, Kawasaki-shi Kanagawa 211-8588 (JP); MATSUI, Takao, Kawasaki-shi Kanagawa 211-8588 (JP); KITAGO, Keita, Kawasaki-shi Kanagawa 211-8588 (JP); UEKI, Toshikazu, Kawasaki-shi Kanagawa 211-8588 (JP)
(74) Representative: HOFFMANN EITLE
(86) International application number: PCT/JP2011/050888
(87) International publication number: WO 2012/098655

(57) **Abstract**

When partial-write is not continuously performed to the same address, write data is held in a data RAM 3 and mask data is held in a mask RAM 4 until a control circuit 2 receives read data corresponding to a read request. Thereby, the control circuit 2 can process another request during the waiting time of memory reading. Accordingly, the throughput of data writing can be improved.

## Description

### FIELD

The present invention relates to a data writing control device, a data writing control method, and an information processing device.

### BACKGROUND

In general, as systems in which a memory control circuit writes data in a memory, there are known a full-write system for writing data of all bytes (full line), and a partial-write system in which data is read out from a memory and a part of the readout data is rewritten by write data from a CPU.

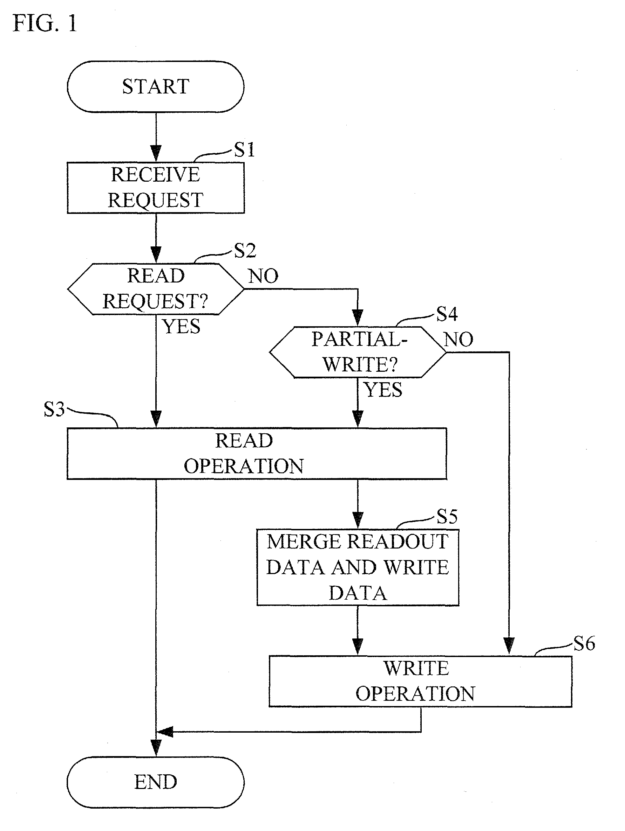

FIG. 1 illustrates an example of the operation of the memory control circuit. First, when the memory control circuit receives a request from the CPU (step S1), the memory control circuit determines whether the received request is a read request (step S2). When the received request is the read request (YES in step S2), the memory control circuit performs read operation to a requested address in the memory (step S3). On the other hand, when the received request is not the read request (NO in step S2), the memory control circuit determines whether the received request is a partial-write request (step S4). When the received request is the partial-write request (YES in step S4), the memory control circuit once performs read operation to a requested address in the memory (step S3), merges the readout data and the write data from the CPU (step S5), and performs write operation to the requested address in the memory (step S6). On the other hand, when the received request is not the partial-write request, i.e., the received request is a full-write request (NO in step S4), the memory control circuit performs write operation to the requested address in the memory (step S6).

Moreover, there has been conventionally known a memory control circuit including an address register for partial-write and a memory data register (e.g., see Patent Document 1).

Here, FIG 2 illustrates the operation of the memory control circuit of Patent Document 1. The explanation is limited to the write operation of the memory control circuit.

First, the memory control circuit determines whether a memory write mode is the partial-write based on information from the CPU (step S10). When the memory write mode is not the partial-write, i.e., the memory write mode is the full-write (NO in step S10), the memory control circuit determines whether the address of write data is identical with an address used for previous partial-write which is stored into the address register for partial-write (step S11).

When the address of the write data is identical with the address used for previous partial-write (YES in step S11), the memory control circuit holds the write data in the memory data register (step S12), and performs write operation to a memory (step S 13). When the address of the write data is not identical with the address used for previous partial-write (NO in step S11), the procedure of step S 13 is performed.

On the other hand, when the memory write mode is the partial-write (YES in step S10), the memory control circuit receives a request for the partial-write (step S 14), and determines whether the address of write data included in the request for the partial-write is identical with an address used for previous partial-write which is stored into the address register for partial-write (step S15). When the address of the write data is identical with the address used for previous partial-write (YES in step S15), the memory control circuit merges the data held in the memory data register and the write data (step S16). Since data identical with data in the memory corresponding to the address on which the partial-write is performed is already stored into the memory data register, memory read operation is not performed in step S16. In addition, the memory control circuit holds the merged data in the memory data register, and performs the write operation to the memory (step S 17).

On the other hand, when the address of the write data is not identical with the address used for previous partial-write (NO in step S15), the memory control circuit outputs a read request to the CPU (step S18). The memory control circuit determines whether the memory control circuit has received read data (step S19). When the memory control circuit has not received the read data (NO in step S19), the determination of step S19 is repeated. On the other hand, when the memory control circuit has received the read data (YES in step S19), the memory control circuit holds the read data in the memory data register (step S20), and the procedure proceeds to step S16.

Thus, at the time of access of the partial-write, the memory control circuit of Patent Document 1 stores the address and the data into the address register for partial-write and the memory data register, respectively. When a next partial-write address is identical with the address held in the address register for partial-write, the memory control circuit reads out the data from the memory data register instead of the memory, and merges the read-out data and the write data (see steps S 15 and S16). Therefore, when the partial-write is continuously performed to the same address, the memory read operation does not need to be performed, and hence the partial-write access can be made high-speed.

### PRIOR ART DOCUMENT

### PATENT DOCUMENT

Patent Document 1: Japanese Laid-open Patent Publication No. 6-119238

### DISCLOSURE OF THE INVENTION

### PROBLEMS TO BE SOLVED BY THE INVENTION

However, in the memory control circuit of Patent Document 1, when the partial-write is not continuously performed to the same address, the memory read operation needs to be performed in a conventional manner. Particularly, in a device equipped with two or more requesters such as CPUs which issue the write or the read request, the request for the partial-write is increased, and the case where the partial-write is not continuously performed to the same address is increased. In this case, the memory control circuit has a problem that high-speed operation cannot be performed by the memory read operation with long access time and the throughput of data writing reduces.

In view of the above described problem, it is an object to provide a data writing control device, a data writing control method, and an information processing device that can improve the throughput of data writing.

### MEANS FOR SOLVING THE PROBLEMS

In order to achieve the above-mentioned object, a data writing control device described herein includes: a determination means configured to determine whether a request from a requestor is a partial-write request for data and the partial-write is continuously performed to the same address; a transmission means configured to, when the request from the requestor is the partial-write request for data and the partial-write is performed to an address different from an address of the previous partial-write, transmit a read request for data to the requestor; and a hold means configured to hold write data included in the partial-write request and data indicating a rewritten location of the write data until read data corresponding to the read request for the data is received.

A data writing control method described herein includes: determining whether a request from a requestor is a partial-write request for data and the partial-write is continuously performed to the same address; transmitting a read request for data to the requestor when the request from the requestor is the partial-write request for data and the partial-write is performed to an address different from an address of the previous partial-write; and holding write data included in the partial-write request and data indicating a rewritten location of the write data until read data corresponding to the read request for the data is received.

### EFFECTS OF THE INVENTION

A data writing control device, a data writing control method, and an information processing device described herein can improve the throughput of data writing.

### BRIEF DESCRIPTION OF DRAWINGS

FIG. 1 is a flowchart illustrating the operation of a memory control circuit;

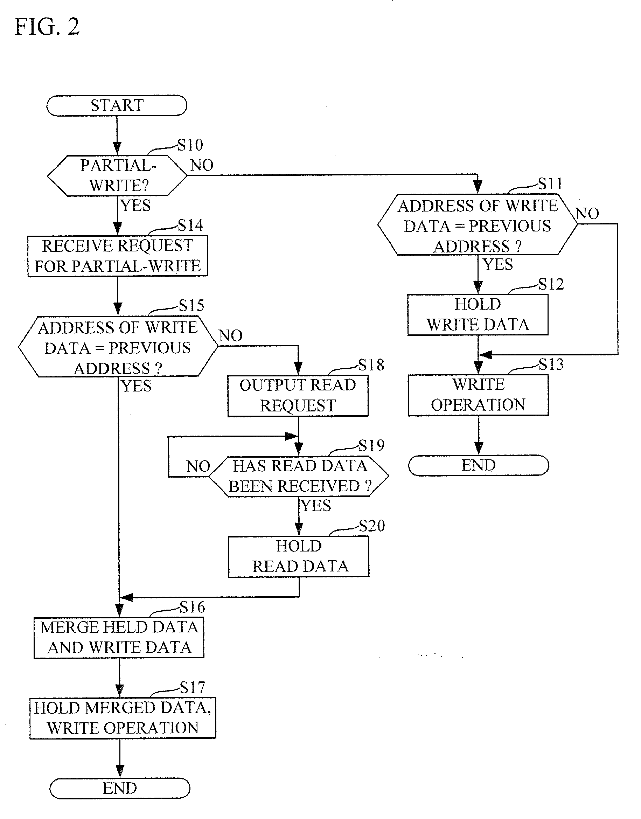

FIG. 2 is a flowchart illustrating the write operation of the memory control circuit;
FIG. 3 is a block diagram illustrating an example of the schematic configuration of an information processing device according to a present embodiment;
FIG. 4 is a block diagram illustrating the schematic configuration of a control circuit 2;
FIG. 5 is a flowchart illustrating a process performed by a data writing control device 1;
FIG. 6A is a schematic diagram illustrating conventional partial-write operation; and
FIG. 6B is a schematic diagram illustrating partial-write operation according to the present embodiment.

### DESCRIPTION OF EMBODIMENTS

A description will be given of embodiments of the invention, with reference to drawings.

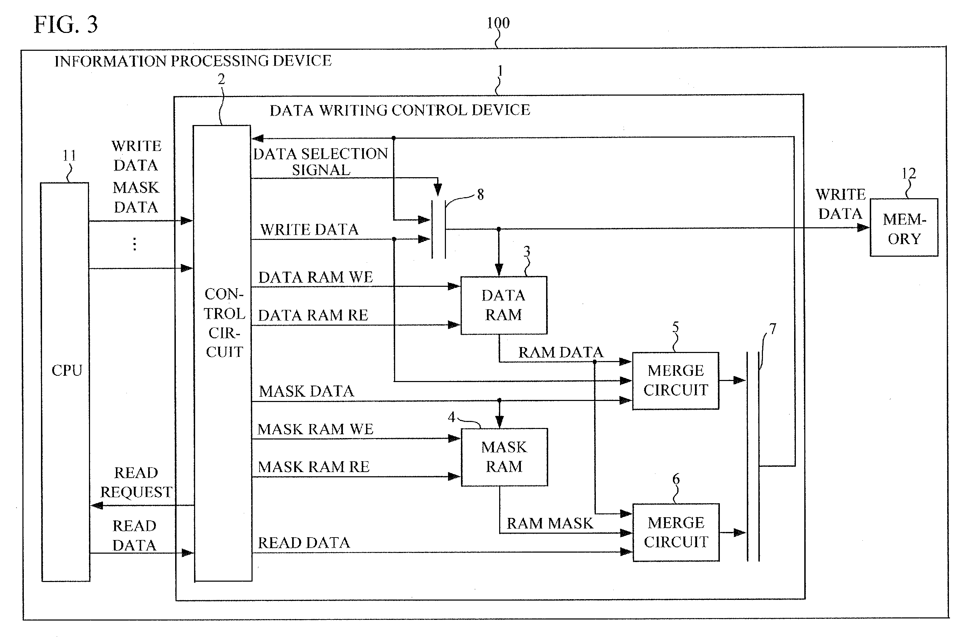

FIG. 3 is a block diagram illustrating an example of the schematic configuration of an information processing device according to a present embodiment.

In FIG. 3, an information processing device 100 includes a CPU 11, a data writing control device 1, and a memory 12. The information processing device is a server or a personal computer, for example. The data writing control device 1 includes a control circuit 2, a RAM 3 (Random Access Memory) for data (hereinafter referred to as "a data RAM"), a RAM 4 for mask data (hereinafter referred to as "a mask RAM"), merge circuits 5 and 6, and selectors 7 and 8. The control circuit 2 serves as a determination means and a transmission means. The data RAM 3 and the mask RAM 4 serve as a hold means. The merge circuits 5 and 6 serve as a merge means.

The control circuit 2 receives a write request from the CPU 11. The write request includes: a full-write request for writing data of full lines in a memory; and a partial-write request in which a part of held data is rewritten by write data from a CPU, and the rewritten data is written in the memory. When the control circuit 2 receives the partial-write request from the CPU 11, the control circuit 2 transmits a read request to the CPU 11, and receives read data corresponding to the read request from the CPU 11. The detailed configuration of the control device 2 is described later. In FIG. 1, a requestor (requesting device) that sends a request to the data writing control device 1 is the single CPU 11, but may be a plurality of CPUs. Moreover, the requestor is not limited to the CPU, and may be an input and output (I/O) device.

The data RAM 3 holds write data or merge data selected by the selector 8. Here, the merge data is data generated by merging a plurality of pieces of data using the merge circuit 5 or 6 as described later. The mask RAM 4 holds mask data. The mask data is data received from the CPU 11 by the partial-write request, and indicates a location of data to be rewritten partially.

The merge circuit 5 merges the write data and data held in the data RAM 3, based on the mask data. The merge circuit 6 merges the read data and the data held in the data RAM 3, based on the mask data. The selector 7 selects the merge data from any one of the merge circuits 5 and 6, and outputs the control circuit 2 and the selector 8. When the partial-write is continuously performed to the same address, the selector 7 selects the merge data from the merge circuit 5. When the partial-write is not continuously performed to the same address, the selector 7 selects the merge data from the merge circuit 6. The selector 8 selects any one of the write data and the merge data, and outputs the selected data to the data RAM 3 and the memory 12.

Next, a description will be given of the operation of the data writing control device 1.

When the control circuit 2 receives the full-write request from the CPU 11, the control circuit 2 outputs a data selection signal for selecting the write data to the selector 8. The selector 8 selects the write data based on the data selection signal, and outputs the write data to the data RAM 3 and the memory 12. When there is data of the same address in the data RAM 3, the data of the same address is updated by the write data.

When the control circuit 2 receives the partial-write request in which the partial-write is continuously performed to the same address as the previous partial-write, from the CPU 11, data corresponding to the address is read out from the data RAM 3, and the merge circuit 5 merges the read-out data and the write data. The merge data output from the merge circuit 5 is output to the data RAM 3 and the memory 12 via the selectors 7 and 8. The data held in the data RAM 3 is updated by the merge data output from the merge circuit 5.

When the control circuit 2 receives the partial-write request in which the partial-write is performed to the address different from the previous partial-write, from the CPU 11, the control circuit 2 outputs the read request to the CPU 11. Moreover, the control circuit 2 holds the write data and the mask data received by this partial-write request, in the data RAM 3 and the mask RAM 4, respectively. Thereby, until the data writing control device 1 receives the read data corresponding to the read request from the CPU 11, the data writing control device 1 can perform another operation. That is, until the control circuit 2 receives the read data corresponding to the read request from the CPU 11, the control circuit 2, the data RAM 3, the mask RAM 4, the merge circuits 5 and 6, and the selectors 7 and 8 can perform a process concerning another request.

When the control circuit 2 receives the read data corresponding to the read request from the CPU 11, priority is given to processing of the read data in the control circuit 2. That is, the write data held in the data RAM 3, the mask data held in the mask RAM 4 and the read data are output to the merge circuit 6, and the write data and the read data are merged based on the mask data. The merge data output from the merge circuit 6 is output to the data RAM 3 and the memory 12 via the selectors 7 and 8. The data held in the data RAM 3 is updated by the merge data output from the merge circuit 6.

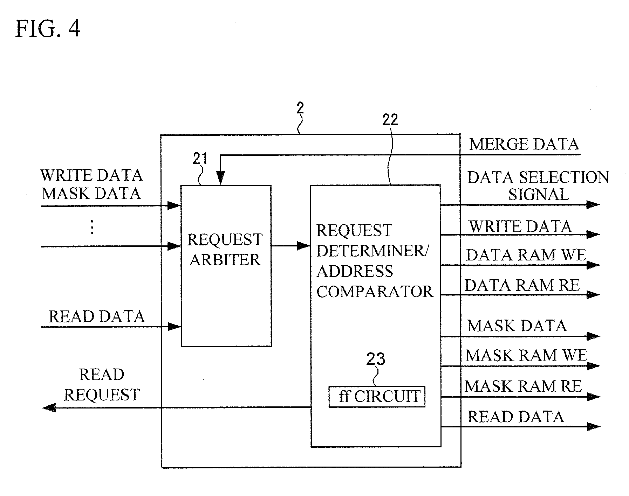

FIG. 4 is a block diagram illustrating the schematic configuration of the control circuit 2.

In FIG. 4, the control circuit 2 includes a request arbiter 21, and a request determiner/ address comparator 22. The request arbiter 21 serves as an arbitration means. The request arbiter 21 arbitrates processing order of the write request from the CPU 11, the read data corresponding to the read request in the partial-write, and the merge data in the partial-write. The priority of the processing is order of the merge data, the read data, and the write request. Thereby, merge processing using the read data can be performed preferentially, compared with the write request from the CPU11.

The request determiner/ address comparator 22 holds the address corresponding to the data held in the data RAM 3 for every data or every request selected by the request arbiter 21. This address is held in a flip-flop (FF) circuit 23, for example. The request determiner/ address comparator 22 compares the held address with the address of data selected by the request arbiter 21 or data included in the request selected by the request arbiter 21, and outputs a given signal and data.

For example, when the merge data is input to the request arbiter 21, the request arbiter 21 notifies the request determiner/ address comparator 22 of the input of the merge data, and the request determiner/ address comparator 22 outputs a data selector signal to the selector 8, and outputs a data RAM WE (Write Enable) signal for writing the merge data to the data RAM 3. Thereby, the merge data is written in the data RAM 3 via the selector 8.

When the read data is input to the request arbiter 21, the request arbiter 21 notifies the request determiner/ address comparator 22 of the input of the read data. The request determiner/ address comparator 22 outputs a data RAM RE (Read Enable) signal for reading out data to be merged with the read data to the data RAM 3. Moreover, the request determiner/ address comparator 22 outputs a mask RAM RE signal for reading out the mask data to the mask RAM 4, and outputs the read data to the merge circuit 6. Thereby, data held in the data RAM 3, the mask data held in the mask RAM 4, and the read data are output to the merge circuit 6. Then, a rewritten part of the data held in the data RAM 3 is specified by the mask data, and the data held in the data RAM 3 and the read data are merged.

When the full-write request is input to the request arbiter 21, the request arbiter 21 notifies the request determiner/ address comparator 22 of the input of the full-write request. The request determiner/ address comparator 22 compares an address of the write data included in the full-write request with an address of the write data included in the previous full-write request which is held in the flip-flop circuit 23. When the address of the write data included in the full-write request is identical with the address of the write data included in the previous full-write request which is held in the flip-flop circuit 23, the request determiner/ address comparator 22 outputs the data selection signal and the write data to the selector 8, and outputs the data RAM WE (Write Enable) signal to the data RAM 3. Thereby, the write data is overwritten into the RAM 3 via the selector 8, and is output to the memory 12. On the other hand, when the address of the write data included in the full-write request is not identical with the address of the write data included in the previous full-write request which is held in the flip-flop circuit 23, the request determiner/ address comparator 22 outputs the data selection signal and the write data to the selector 8. Thereby, the write data is output to the memory 12.

When the partial-write request is input to the request arbiter 21, the request arbiter 21 notifies the request determiner/ address comparator 22 of the input of the partial-write request. The request determiner/ address comparator 22 compares an address of the write data included in the partial-write request with an address of the write data included in the previous partial-write request which is held in the flip-flop circuit 23. When the address of the write data included in the partial-write request is identical with the address of the write data included in the previous partial-write request which is held in the flip-flop circuit 23, the request determiner/ address comparator 22 outputs the write data and the mask data to the merge circuit 5, and outputs the data RAM RE signal to the data RAM 3. Thereby, a rewritten part of the data held in the data RAM 3 is specified by the mask data, and the data held in the data RAM 3 and the write data are merged. In this case, in the partial-write, the memory read operation does not need to be performed, and hence the throughput of memory writing can be improved.

On the other hand, when the address of the write data included in the partial-write request is not identical with the address of the write data included in the previous partial-write request which is held in the flip-flop circuit 23, the request determiner/ address comparator 22 outputs the read request to the CPU 11, outputs the data selection signal and the write data to the selector 8, outputs the data RAM WE signal to the data RAM 3, and outputs the mask data and the mask RAM WE signal to the mask RAM 4. Thereby, until the control circuit 2 receives the read data corresponding to the read request, the write data is held in the data RAM 3 and the mask data is held in the mask RAM 4. In this case, the control circuit 2 can process another request during waiting time of the read data, so that the throughput of data writing can be improved.

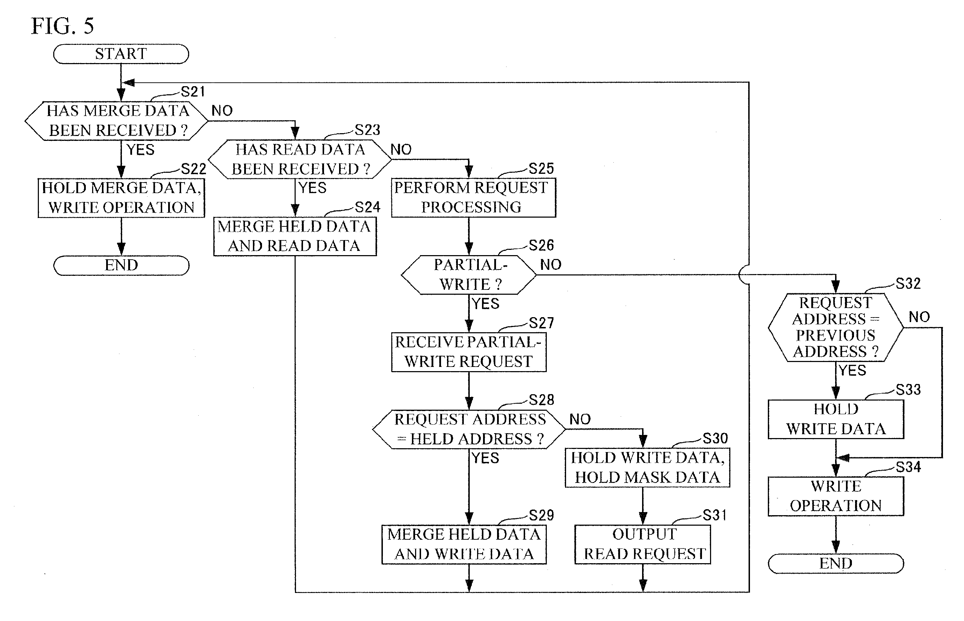

FIG. 5 is a flowchart illustrating a process performed by the data writing control device 1.

First, the control circuit 2 determines whether the control circuit 2 has received the merge data (step S21). When the control circuit 2 has received the merge data (YES in step S21), the control circuit 2 outputs the data selection signal for selecting the merge data to the selector 8, outputs the data RAM WE (Write Enable) signal to the data RAM 3, and writes the merge data into the data RAM 3 and the memory 12 (step S22).

On the other hand, when the control circuit 2 has not received the merge data (NO in step S21), the control circuit 2 determines whether the control circuit 2 has received the read data (step S23). When the control circuit 2 has received the read data (YES in step S23), the control circuit 2 outputs the data RAM RE (Read Enable) signal for reading out the write data to be merged with the read data to the data RAM 3, outputs the mask RAM RE signal for reading out the mask data to the mask RAM 4, and outputs the read data to the merge circuit 6. Thereby, the write data held in the data RAM 3, the mask data held in the mask RAM 4, and the read data are output to the merge circuit 6. Then, a rewritten part of the data held in the data RAM 3 is specified by the mask data, and the data held in the data RAM 3 and the read data are merged (step S24). Then, the procedure returns to step S21.

When the control circuit 2 has not received the read data (NO in step S23), the control circuit 2 performs processing of a request (step S25). Specifically, the request arbiter 21 selects a request to be processed. Next, the control circuit 2 determines whether the request to be processed is the partial-write request (step S26). When the request to be processed is the partial-write request (YES in step S26), the request determiner/ address comparator 22 in the control circuit 2 receives the partial-write request (step S27). Then, the request determiner/ address comparator 22 in the control circuit 2 compares the address of the write data included in the partial-write request with the address of the write data included in the previous partial-write request which is held in the flip-flop circuit 23 (step S28).

When the address of the write data included in the partial-write request is identical with the address of the write data included in the previous partial-write request which is held in the flip-flop circuit 23 (YES in step S28), the request determiner/ address comparator 22 outputs the write data and the mask data to the merge circuit 5, and outputs the data RAM RE signal to the data RAM 3. The merge circuit 5 specifies a rewritten part of the data held in the data RAM 3 by using the mask data, and merges the data held in the data RAM 3 and the write data (step S29). Then, the procedure returns to step S21.

On the other hand, when the address of the write data included in the partial-write request is not identical with the address of the write data included in the previous partial-write request which is held in the flip-flop circuit 23 (NO in step S28), the request determiner/ address comparator 22 outputs the data selection signal and the write data to the selector 8, outputs the data RAM WE signal to the data RAM 3, and outputs the mask data and the mask RAM WE signal to the mask RAM 4. As a result, the data RAM 3 holds the write data, and the mask RAM 4 holds the mask data (step S30). The request determiner/ address comparator 22 outputs the read request to the CPU 11 (step S31). Then, the procedure returns to step S21.

When the request to be processed is not the partial-write request in step S26, i.e., the request to be processed is the full-write request (NO in step S26), the request determiner/ address comparator 22 compares the address of the write data included in the full-write request with the address of the write data included in the previous full-write request which is held in the flip-flop circuit 23 (step S32).

When the address of the write data included in the full-write request is identical with the address of the write data included in the previous full-write request which is held in the flip-flop circuit 23 (YES in step S32), the request determiner/ address comparator 22 outputs the data selection signal and the write data to the selector 8, and outputs the data RAM WE (Write Enable) signal to the data RAM 3. Thereby, the write data is overwritten in the data RAM3 (step S33). The write data is written into the memory 12 (step S34). On the other hand, when the address of the write data included in the full-write request is not identical with the address of the write data included in the previous full-write request which is held in the flip-flop circuit 23 (NO in step S32), the request determiner/ address comparator 22 outputs the data selection signal and the write data to the selector 8. Thereby, the write data is written into the memory 12 (step S34).

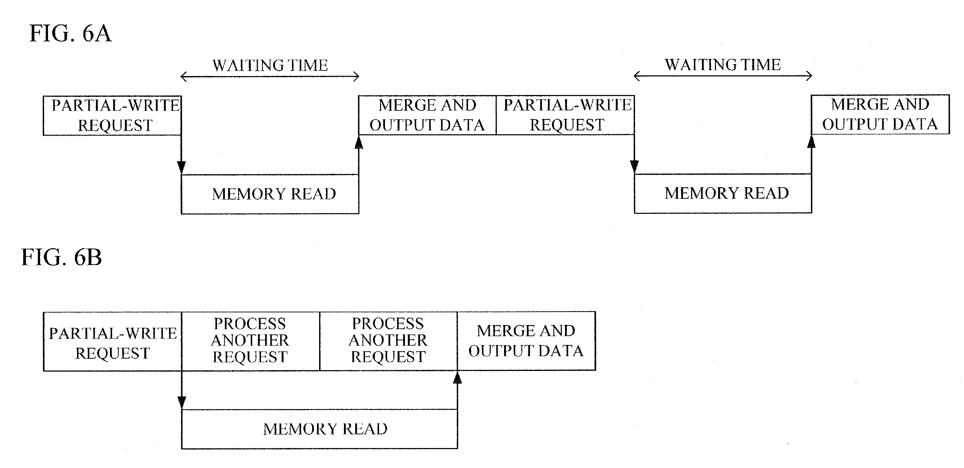

As described above, according to the present embodiment, when the partial-write is not continuously performed to the same address (NO in step S28 and step S30), the write data is held in the data RAM 3 and the mask data is held in the mask RAM 4 until the control circuit 2 receives the read data corresponding to the read request. Therefore, although in the conventional partial-write of FIG. 6A, a request cannot be processed during the waiting time of the memory reading, in the partial-write of FIG. 6B according to the present embodiment, the control circuit 2 can process another request during the waiting time of the memory reading. Accordingly, the throughput of data writing can be improved.

### EXPLANATION OF REFERENCES

1 data writing control device, 2 control circuit, 3 data RAM, 4 mask RAM, 5,6 merge circuit, 7, 8 selector, 11 CPU, 21 request arbiter, 22 request determiner/ address comparator, 23 flip-flop circuit

## Claims

1. A data writing control device comprising:
a determination means configured to determine whether a request from a requestor is a partial-write request for data and the partial-write is continuously performed to the same address;
a transmission means configured to, when the request from the requestor is the partial-write request for data and the partial-write is performed to an address different from an address of the previous partial-write, transmit a read request for data to the requestor; and
a hold means configured to hold write data included in the partial-write request and data indicating a rewritten location of the write data until read data corresponding to the read request for the data is received.

2. The data writing control device as claimed in claim 1, further comprising:
an arbiter configured to arbitrate processing order of merge data in which the read data is merged with the write data, the read data and a write request from the requestor according to order of the merge data, the read data and the write request.

3. The data writing control device as claimed in claim 1, further comprising:
a merge means configured to merge the write data included in the partial-write request with write data which corresponds to the previous partial-write and is held in the hold means, based on the data indicating the rewritten location of the write data when the request from the requestor is the partial-write request for data and the partial-write is continuously performed to the same address.

4. A data writing control method comprising:
determining whether a request from a requestor is a partial-write request for data and the partial-write is continuously performed to the same address;
transmitting a read request for data to the requestor when the request from the requestor is the partial-write request for data and the partial-write is performed to an address different from an address of the previous partial-write; and
holding write data included in the partial-write request and data indicating a rewritten location of the write data until read data corresponding to the read request for the data is received.

5. An information processing device by comprising:
a data writing control device including:
a determination means configured to determine whether a request from a requestor is a partial-write request for data and the partial-write is continuously performed to the same address;
a transmission means configured to, when the request from the requestor is the partial-write request for data and the partial-write is performed to an address different from an address of the previous partial-write, transmit a read request for data to the requestor; and
a hold means configured to hold write data included in the partial-write request and data indicating a rewritten location of the write data until read data corresponding to the read request for the data is received; and
a requestor configured to transmit a request to the data writing control device.
